# EUROPÄISCHE PATENTSCHRIFT

(11) **EP 0 602 075 B1**
(45) Veröffentlichungstag und Bekanntmachung des Hinweises auf die Patenterteilung: **02.11.1995**
(21) Anmeldenummer: 92917604.8
(22) Anmeldetag: 20.08.1992
(51) Int. Cl.: G01C 19/72

(54) **OPTISCHER SENSOR FÜR ROTATIONSBEWEGUNGEN**
OPTICAL SENSOR FOR ROTARY MOVEMENTS
DETECTEUR OPTIQUE POUR MOUVEMENTS DE ROTATION

(30) Priorität: 02.09.1991 DE 4129085
(43) Veröffentlichungstag der Anmeldung: 22.06.1994
(73) Patentinhaber: ROBERT BOSCH GMBH, 70442 Stuttgart (DE)
(72) Erfinder: DRABAREK, Pawel, D-7257 Ditzingen (DE)
(86) Internationale Anmeldenummer: DE9200695
(87) Internationale Veröffentlichungsnummer: WO9305364

(56) Entgegenhaltungen:
- APPLIED OPTICS, Bd. 29, Nr. 9, 20. März 1990, Seiten 1345-1349, XP 102330; K. HOTATE et al.: "Drift reduction in an optical heterodyne fiber gyro"
- SPIE MILESTONE SERIES, Bd. MS8, 1988, Bellingham, Washington, US, Seiten 421-428, XP233006; Y. OHTSUKA : "Optical heterodyne-detection schemes for fiber-optic gyroscopes"
- IEE PROCEEDINGS, Bd. 132, Nr. 5, Oktober 1985, Stevenage, Herts, GB, Seiten 265-270; I.P. GILES : "Feasibility of a heterodyne all-fibre optical gyroscope"

## Beschreibung

### Stand der Technik

Die Erfindung geht aus von einem optischen Sensor für Rotationsbewegungen nach der Gattung der Ansprüche 1, 2 und 3. Aus der Veröffentlichung von K. HOTATE und S. SAMUKAWA, "Drift reduction in an optical heterodyne fiber gyro", Applied Optics, Vol. 29, No. 9, 20. März 1990, S. 1345 - 1349 ist ein derartiger optischer Sensor bekannt. Dem bekannten Sensor liegt der Sagnac-Effekt zugrunde, der in einem Faserkreisel auftritt. Die von einer Laserdiode erzeugte Strahlung wird mit einem Gitter und einem Strahlteiler in zwei Teilstrahlen aufgespalten und anschließend in eine ringförmig angeordnete Lichtleitfaser eingekoppelt. Ein Teilstrahl durchläuft die Faser im Uhrzeiger- und der andere Teilstrahl im Gegenuhrzeigersinn. Die von der Faser ausgekoppelten Strahlungen werden durch den Strahlteiler geleitet und treffen auf einen akustooptischen Modulator, der die Strahlungen überlagert. Das Gitter und der akustooptische Modulator, deren Diffraktionswinkel identisch sind, werden symmetrisch in Bezug auf den Strahlteiler angeordnet. Ein Fotodetektor empfängt einen nicht diffraktierten Teil der im Uhrzeigersinn in der Faser umgelaufenen Strahlung, wobei die Frequenz der Strahlung gleich der Frequenz der Halbleiterlaserstrahlung ist. Weiterhin empfängt der Fotodetektor einen diffraktierten Teil der im Gegenuhrzeigersinn in der Faser umlaufenden Strahlung mit einer Frequenz, die gegenüber der vom Halbleiterlaser erzeugten Strahlung um die vom akustooptischen Modulator erzeugte Frequenz verändert ist. Der Fotodetektor gibt als Ausgangssignal die veränderte Frequenz aus, die als Überlagerungsfrequenz bezeichnet wird. Eine Drehung der Lichtleiterfaser führt zu einer Phasenverschiebung zwischen dem vom Fotodetektor abgegebenen Signal und dem Signal, das den akustooptischen Modulator steuert.

Die Autoren der Veröffentlichung räumen ein, daß dieser bislang beschriebene optische Sensor für Rotationsbewegungen Nachteile hinsichtlich der Nullpunktstabilität aufweise, die insbesondere durch eine Temperaturdrift des akustooptischen Modulators bedingt sei. In einer Weiterbildung der bekannten Vorrichtung wird deshalb ein Referenzpfad eingeführt, der gegenüber der ringförmig angeordneten Lichtleitfaser einen optischen Kurzschluß darstellt, auf den der Meßeffekt nicht einwirkt. Der Meßablauf ist in zwei Zeitabschnitte unterteilt. Im ersten Abschnitt, der kürzer als die Laufzeit der optischen Strahlung durch die ringförmig angeordnete Lichtleiterfaser sein muß, wird die Phase des Ausgangssignals des Fotodetektors gespeichert, wobei die beiden Teilstrahlungen durch den optischen Kurzschlußpfad praktisch ohne zeitliche Verzögerung laufen. Innerhalb des zweiten Abschnitts werden die von der ringförmigen Lichtleiterfaser ausgekoppelten Teilstrahlungen, die diese Faser nunmehr durchlaufen haben, vom Fotodetektor empfangen. Durch Vergleich der Phasenlage des im zweiten mit dem im ersten Abschnitt erhaltenen Fotodetektorsignals wird das Meßergebnis ermittelt.

Aus der Publikation von I. P. GILES, "Feasibility of a heterodyne all-fibre optical gyroscope", veröffentlicht in IEE Proceedings, Bd. 132, Nr. 5, Oktober 1985, S. 265 - 270 sowie aus der Veröffentlichung von Ohtsuka, "Optical heterodynedetection schemes for fibre-optic gyroscopes", veröffentlicht in SPIE Milestone Series, Bd. MS 8, 1988, Wellingham, Washington, USA, S. 421 - 428 sind ebenfalls jeweils optische Sensoren für Rotationsbewegungen bekannt, die auf der Basis des Heterodyne-Meßverfahrens arbeiten. Die vorbekannten optischen Sensoren verwenden eine frequenzmodulierte Laserstrahlungsquelle, aus der zwei Teilstrahlen erzeugt, unter Zwischenschaltung einer Lichtleitfaseranordnung zur Interferenz gebracht und in einem Photodetektor nachgewiesen werden, dessen Ausgang mit einem Phasenvergleicher verbunden ist. Vorbekannt sind Ausführungsbeispiele mit einem oder mit zwei Detektoren. Während bei den Ausführungsbeispielen mit einem Detektor die Phasenlage des Ausgangssignals des Detektors mit einem elektrischen Signal verglichen wird, werden bei den Ausführungsbeispielen mit zwei Detektoren die Phasenlagen der Ausgangssignale der beiden Detektoren unmittelbar miteinander verglichen. Der erforderliche Frequenzunterschied wird gemäß einem Ausführungsbeispiel mittels eines akustooptischen Modulators auf aktive Weise erzielt. Ein anderes Ausführungsbeispiel sieht vor, daß nur ein Teilstrahl einer frequenzmodulierten Laserstrahlungsquelle in eine Lichtleitfaseranordnung eingekoppelt wird, während der andere Teilstrahl über eine von der Lichtleitfaseranordnung getrennte Referenzstrecke geleitet ist.

Der Erfindung liegt die Aufgabe zugrunde, einen optischen Sensor für Rotationsbewegungen anzugeben, der mit einfachen Mitteln realisierbar ist.

Die Aufgabe wird jeweils durch die in den Ansprüchen 1, 2 und 3 angegebenen Merkmale gelöst.

### Vorteile der Erfindung

Gemäß einer ersten Ausführung des erfindungsgemäßen Sensors sind ein erster Strahlungskoppler zum Auskoppeln einer durch eine ringförmige Lichtleitfaser gelaufenen zweiten Teilstrahlung und zum Führen einer ersten in die Faser einzukoppelnden Teilstrahlung sowie ein zweiter Koppler zum Auskoppeln der durch die ringförmige Lichtleitfaser gelaufenen ersten Teilstrahlung und zum Führen der zweiten in die Faser einzukoppelnden Teilstrahlung vorgesehen. Die ausgekoppelten Teilstrahlen werden überlagert und dem Fotodetektor zugeleitet. Ein leicht auswertbares, vom Fotodetektor abgebbares Signal wird erhalten, wenn die beiden ausgekoppelten Strahlungen einen Frequenzunterschied aufweisen, der bei der Überlagerung der beiden ausgekoppelten Strahlungen zu einer Differenzfrequenz führt, die beispielsweise im kHz- oder MHz-Bereich liegt. Der Frequenzunterschied wird durch eine Modulation der Frequenz der Laserstrahlungsquelle und die Verwendung eines optischen Laufzeitgliedes in einer der beiden Teilstrahlungen erreicht. Ein Phasenvergleicher ermittelt eine Phasendifferenz zwischen einem, dem Modulationssignal der Laserstrahlungsquelle entsprechenden Signal und dem vom Fotodetektor abgegebenen Signal. Aus der Phasendifferenz kann die Drehrate des gesamten Sensors bestimmt werden.

Der wesentliche Vorteil des erfindungsgemäßen Sensors liegt in seinem einfachen Aufbau, der mit gängigen faseroptischen Elementen auskommt. Dadurch kann der gesamte Sensor sehr klein und kostengünstig aufgebaut werden. Besonders vorteilhaft ist weiterhin die Möglichkeit, die vorkommenden optischen Strahlungen nur in Lichtleitfasern zu führen. Mit dieser Maßnahme sind Störeinflüsse vermeidbar, die auf im Freien verlaufende Strahlungen einwirken könnten.

Die genannten Vorteile gelten gleichermaßen für die weiteren Ausführungen des erfindungsgemäßen Sensors.

Der erfindungsgemäße optische Sensor für Rotationsbewegungen eignet sich als Faserkreisel in unterschiedlichen Anwendungen. Besonders geeignet ist er als Drehratensensor, der beispielsweise in einem Kraftfahrzeug zum Regeln der Fahrhydraulik vorgesehen ist. Der mögliche Aufbau mit Komponenten der integrierten Optik sowie eine kompakte Bauweise ohne mechanisch bewegte Bauteile machen den erfindungsgemäßen optischen Sensor besonders geeignet zum Einbau in Fahrzeugen aller Art, die zum Teil rauhen Umgebungsbedingungen ausgesetzt sein können.

In einer zweiten Ausführung des erfindungsgemäßen Sensors ist zwischen dem ersten und zweiten Koppler ein Strahlungspfad vorgesehen, der die erste Teilstrahlung über den zweiten Koppler und die zweite Teilstrahlung über den ersten Koppler dem Fotodetektor zuführt. Dieser Strahlungspfad entspricht dem im eingangs genannten Stand der Technik vorhandenen Referenzpfad. Der weitere Aufbau sowie die Strahlungsführung unterscheiden sich jedoch erheblich. Auch bei dieser Ausführung sind ein Modulator zum Modulieren der Strahlungsfrequenz des Lasers sowie das optische Laufzeitglied in einem der beiden Teilstrahlungen vorgesehen. Neben der Frequenzmodulation ist eine weitere Betriebsart des Lasers vorgesehen, wobei der Laser für eine erste vorgebbare Zeit eingeschaltet und für eine zweite vorgebbare Zeit abgeschaltet ist. Ein vorhandener Phasenvergleicher ermittelt eine Phasendifferenz zwischen dem vom Fotodetektor während der ersten Zeit und dem während der zweiten Zeit abgegebenen Signal.

Der Vorteil dieser Ausführung gegenüber der ersten Ausführung liegt darin, daß bei der Ermittlung der Phasendifferenz lediglich die vom Fotodetektor abgegebenen Signals verwendet werden. Störeinflüsse, die sich auf die optischen Strecken auswirken, beeinflussen das Ergebnis nicht.

Gemäß einer dritten Ausführung des erfindungsgemäßen Sensors ist vorgesehen, daß aus dem ersten Koppler ein Teil der ersten Teilstrahlung als erste Referenzstrahlung und aus dem zweiten Koppler ein Teil der zweiten Teilstrahlung als zweite Referenzstrahlung ausgekoppelt werden. Die beiden Referenzstrahlungen werden einem Referenzfotodetektor zugeleitet. Es ist ein Phasenvergleicher vorgesehen, der eine Phasendifferenz zwischen den vom Fotodetektor und vom Referenzfotodetektor abgegebenen Signalen ermittelt.

Der Vorteil dieser Ausführung liegt darin, daß an den beiden Fotodetektoren kontinuierlich Signale abgreifbar sind, deren Phasendifferenz vom Phasenvergleicher ermittelbar ist. Der intermittierende Betrieb des Lasers entfällt.

Vorteilhafte Weiterbildungen und Verbesserungen des erfindungsgemäßen optischen Sensors für Rotationsbewegungen ergeben sich aus Unteransprüchen.

Vorteilhaft ist die Ausführung des gesamten optischen Aufbaus in Lichtleitfasertechnik. Eine Störung der unterschiedlichen Strahlungen durch Umwelteinflüsse wird damit weitgehend vermieden. Weiterhin ist mit dieser Maßnahme der konstruktive Aufbau des Sensors in weiten Grenzen beliebig festlegbar.

Vorteilhaft ist der Einsatz eines dritten Strahlungskopplers zum Vereinigen der beiden ausgekoppelten Teilstrahlungen. Die Justierarbeit, die durch die Überlagerung der beiden Teilstrahlen unmittelbar beim Fotodetektor erforderlich wäre, entfällt damit. In der dritten Ausführung ist aus den gleichen Gründen die Verwendung eines vierten Kopplers zur Überlagerung der beiden Referenzstrahlen vorteilhaft.

Die Vorgabe von gleichen Zeiten in der zweiten Ausführung während denen der Laser ein- und abgeschaltet ist, führt zur höchstmöglichen Meßrate.

Weitere vorteilhafte Weiterbildungen und Verbesserungen des erfindungsgemäßen optischen Sensors für Rotationsbewegungen ergeben sich aus weiteren Unteransprüchen in Verbindung mit der folgenden Beschreibung.

### Zeichnung

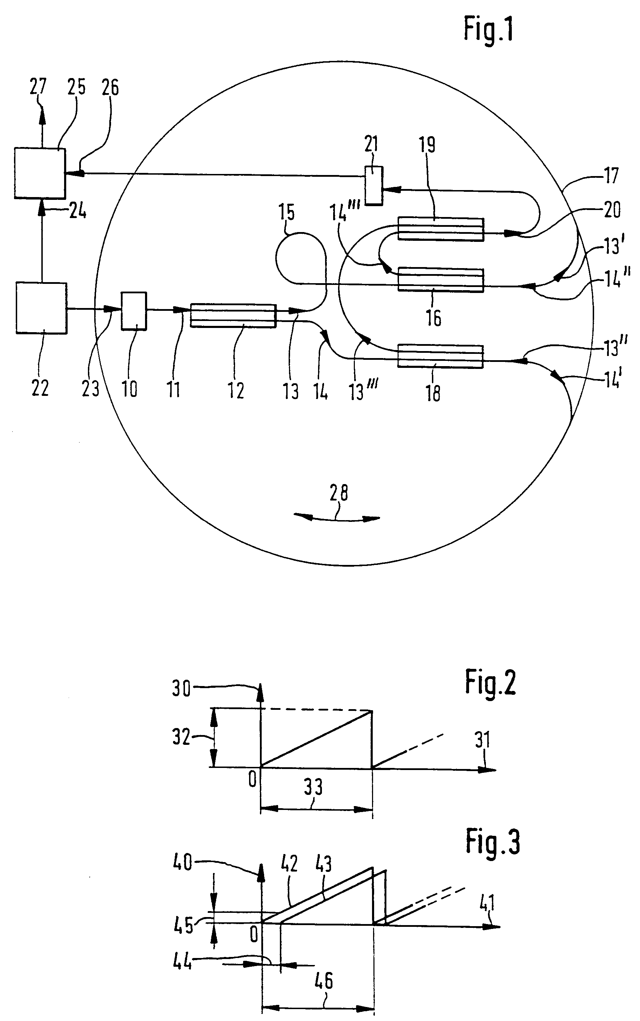

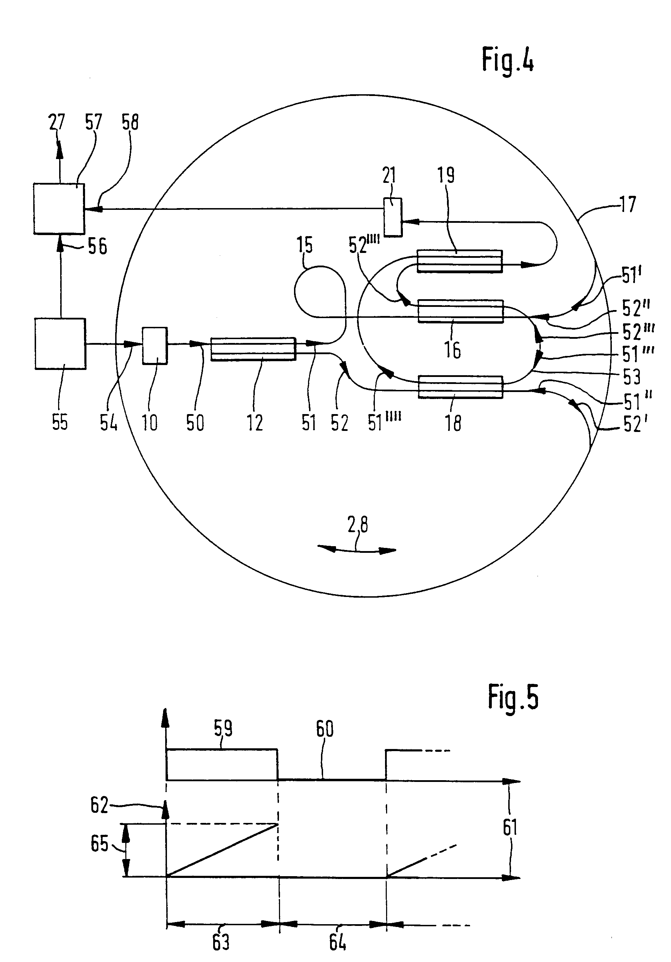

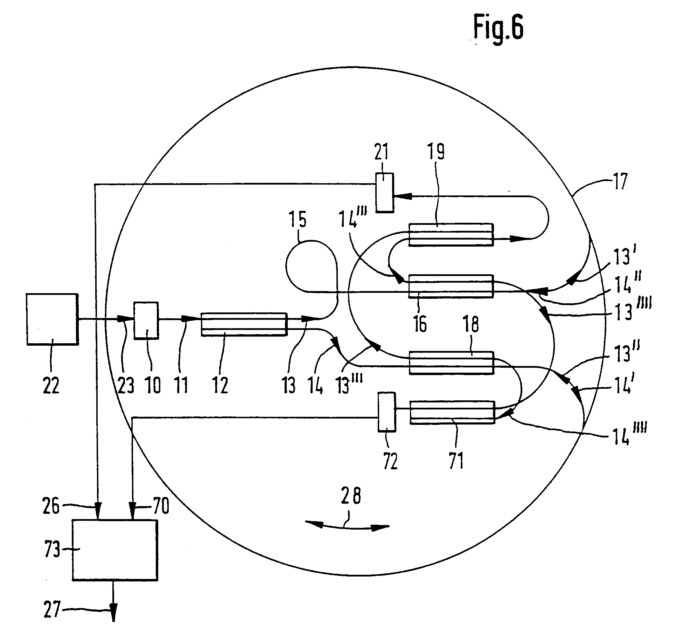

Figur 1 zeigt ein Ausführungsbeispiel eines erfindungsgemäßen optischen Sensors für Rotationsbewegungen, Figuren 2 und 3 zeigen funktionale Zusammenhänge von Frequenzen optischer Strahlungen in Abhängigkeit von der Zeit, Figur 4 zeigt eine andere Ausführung eines erfindungsgemäßen optischen Sensors für Rotationsbewegungen, Figur 5 zeigt in ihrem oberen Teil einen funktionalen Zusammenhang zwischen einer Einschaltdauer und einer Pause eines Lasers und in ihrem unteren Teil einen funktionalen Zusammenhang zwischen Frequenzen optischer Strahlungen und der Zeit und Figur 6 zeigt eine weitere Ausführung eines erfindungsgemäßen optischen Sensors für Rotationsbewegungen.

Figur 1 zeigt eine Laserstrahlungsquelle 10, die eine Strahlung 11 an Mittel 12 zum Aufteilen der Strahlung 11 in eine erste und zweite Teilstrahlung 13, 14 abgibt.

Die erste Teilstrahlung 13 gelangt nach dem Durchlaufen eines optischen Laufzeitgliedes 15 in einen ersten Koppler 16, den sie als in eine ringförmige Lichtleitfaseranordnung 17 einzukoppelnde erste Strahlung 13′ verläßt. Nach einem Durchlaufen der Anordnung 17 wird die erste Teilstrahlung 13, 13′ als erste auszukoppelnde Strahlung 13˝ einem zweiten Koppler 18 zugeführt, den sie als erste ausgekoppelte Strahlung 13‴ verläßt. Die erste ausgekoppelte Strahlung 13‴ gelangt nach Durchlaufen eines dritten Kopplers 19 als Ausgangsstrahlung 20 auf einen Fotodetektor 21.

Die zweite Teilstrahlung 14 wird nach dem Durchlaufen des zweiten Kopplers 18 zur zweiten, in die ringförmige Lichtleitfaseranordnung 17 einzukoppelnde Strahlung 14′. Die zweite einzukoppelnde Strahlung 14′ wird gegenüber der ersten einzukoppelnden Strahlung 13′ in entgegengesetzter Richtung der Anordnung 17 eingekoppelt. Die einzukoppelnde zweite Strahlung 14′ verläßt die Anordnung nach dem Durchlaufen als zweite auszukoppelnde Strahlung 14˝ und gelangt zum ersten Koppler 16. Der erste Koppler 16 leitet die zweite auszukoppelnde Strahlung 14˝ als zweite ausgekoppelte Strahlung 14‴ dem dritten Koppler 19 zu, der sie mit der ersten ausgekoppelten Strahlung 13‴ zur Ausgangsstrahlung 20 überlagert.

Der Laser 10 wird von einem Modulator 22 mit einem Modulationssignal 23 angesteuert. Der Modulator 22 gibt weiterhin ein dem Modulationssignal 23 entsprechendes Signal 24 an einen Phasenvergleicher 25 ab, dem weiterhin ein Ausgangssignal 26 des Fotodetektors 21 zugeleitet ist. An einem Ausgang 27 der Phasenvergleichers 25 ist ein Signal abnehmbar, das ein Maß für die Drehrate des Sensors ist. Die Drehung des Sensors bezieht sich auf einen in Figur 1 nicht gezeigten Mittelpunkt. Die beiden Drehrichtungen sind in Figur 1 mit der Bezugszahl 28 eingetragen.

Figur 2 zeigt einen funktionalen Zusammenhang zwischen einer Frequenz 30 der vom Laser 10 abgegebenen Strahlung 11 und der Zeit 31. Der maximale Frequenzunterschied 32, der durch das Modulationssignal 23 vorgegeben ist, tritt innerhalb eines Zeitintervalls 33 auf.

Figur 3 zeigt einen funktionalen Zusammenhang zwischen einer Frequenz 40, welche die erste einzukoppelnde Strahlung 13′ und die zweite einzukoppelnde Strahlung 14′ aufweisen, und der Zeit 41. Der Kurvenverlauf mit der Bezugszahl 42 entspricht dem Frequenzverlauf der zweiten einzukoppelnden Strahlung 14′ und der Kurvenverlauf mit der Bezugszahl 43 entspricht dem Frequenzverlauf der ersten einzukoppelnden Strahlung 13′. Die Kurvenverläufe 42, 43 sind gegeneinander um das Zeitintervall 44 verschoben und weisen deshalb einen Frequenzversatz 45 auf. Das in Figur 3 eingetragenen Zeitintervall 46 entspricht dem in Figur 2 gezeigten Intervall 33.

Die Funktion des in Figur 1 gezeigten optischen Sensors für Rotationsbewegungen wird anhand der in den Figuren 2 und 3 gezeigten funktionalen Zusammenhängen näher erläutert:

Der erfindungsgemäße optische Sensor für Rotationsbewegungen bestimmt die Drehrate der ringförmigen Lichtleitfaseranordnung 17, und somit die des gesamten Sensors, in eine der beiden Drehrichtungen 28. Die absolute Winkellage in Bezug auf einen Referenzwinkel sowie eine Winkelbeschleunigung oder andere Kennwerte sind aus der Drehrate ableitbar. Ausgenutzt wird die Änderung der Laufzeit einer optischen Strahlung in der Anordnung 17, die als Folge einer Wegverlängerung, verursacht durch die Drehbewegung, auftritt. Bei einer Drehung der Anordnung 17 im Uhrzeigersinn verkürzt sich beispielsweise der effektive Weg, der von der einzukoppelnden Strahlung 13′ in der Anordnung 17 zurückzulegende Weg während sich gleichzeitig der Weg der einzukoppelnden Strahlung 14′ verlängert. Nach einer Überlagerung der beiden ausgekoppelten Strahlungen 13‴, 14‴ kann sich die Gesamtstrahlung zwischen dem Wert Null und einem Maximalwert ändern. Ausgewertet werden müßte der absolute Pegel des vom Fotodetektor 21 abgegebenen Ausgangssignals 26. Es ist deshalb das Heterodyn-Meßverfahren vorgesehen, bei dem bereits die einzukoppelnden Strahlungen 13′, 14′ einen vorgegebenen Frequenzunterschied aufweisen. Mit dieser Maßnahme wird erreicht, daß auch bei ruhender Anordnung 17 am Fotodetektor 21 ein Ausgangssignal 26 erhalten wird, das eine der Überlagerungsfrequenz entsprechende Frequenz aufweist, wobei zur Bestimmung der Drehrate lediglich die Phasendifferenz zwischen diesem Ausgangssignal 26 und einem dem Modulationssignal 23 entsprechenden Signal 24 im Phasenvergleicher 25 auszuwerten ist.

Das vom Modulator 22 abgegebene Modulationssignal 23 moduliert die Frequenz der vom Laser 10 abgegebenen Strahlung 11. Der Laser 10 ist vorzugsweise ein strommodulierbarer Halbleiterlaser. Der Frequenzverlauf der Strahlung 11 in Abhängigkeit von der Zeit ist in Figur 2 gezeigt. Der Frequenzmodulationshub entspricht der maximalen Frequenzdifferenz 32, die während dem Zeitintervall 33 auftritt, das der Modulationsperiode entspricht. Die vorzugebende Frequenzdifferenz 32 ist im Zusammenhang mit dem optischen Laufzeitglied 15 zu sehen, das im Strahlengang der ersten Teilstrahlung 13 oder im Strahlengang der zweiten Teilstrahlung 14 angeordnet ist. Das Laufzeitglied 15 ist beispielsweise als optischer Umweg in Lichtleitfasertechnik realisiert. Der Umweg 15 führt zu einer Frequenzverschiebung zwischen den Teilstrahlen 13, 13′, 13˝, 13‴; 14, 14′, 14˝, 14‴, der in Figur 3 gezeigt ist. Das Zeitintervall 44 entspricht der Laufzeit der optischen Strahlung im Umweg 15. Die resultierende Frequenzdifferenz, die zu jeder Zeit gegeben ist, ist in Figur 3 mit dem Frequenzversatz 45 eingetragen. Das Intervall 44 ist im Vergleich zum Intervall 33, 46 übertrieben lang eingetragen. Das Intervall 44 liegt beispielsweise im Nanosekundenbereich, was einem im Meterbereich liegenden Umweg 15 entspricht. Das Intervall 33, 46 liegt dagegen beispielsweise im Millisekundenbereich. Der Frequenzversatz 45 ergibt sich aus dem maximalen Modulationsfrequenzhub 32 geteilt durch das Zeitintervall 33, 46 multipliziert mit der Laufzeit des Umwegs 15. Der Frequenzversatz 45 wird beispielsweise in den kHz- oder MHz-Bereich gelegt.

Eine Drehung der Anordnung 17 führt zu einer Änderung der Phasenlage des Ausgangssignals 26. Durch Vergleich der Phase des Ausgangssignals 26 mit der Phase eines Referenzsignals ist die Drehrate bestimmbar. Das Referenzsignal wird aus dem Modulator 22 abgeleitet. Er gibt das dem Modulationssignal 23 entsprechende Signal 24 ab, das beispielsweise eine dem Zeitintervall 33, 46 entsprechende Periode aufweist. Das dem Modulationssignal 23 entsprechende Signal 24 weist eine feste Phasenbeziehung zum Augangssignal 26 bei ruhender Anordnung 17 auf. Ein unmittelbarer Vergleich der Phasenlage der Signale 24, 26 ist im allgemeinen nicht möglich. Der Vergleicher 25 ermittelt die Differenz anhand eines vorgegebenen Korrekturfaktors, der theoretisch oder experimentell ermittelbar ist. An seinem Ausgang 27 steht ein Signal zur Verfügung, das ein Maß für die Drehrate der ringförmigen Lichtleitfaseranordnung 17 und somit für die Drehrate des gesamten Sensors ist.

Figur 4 zeigt eine andere Ausführung des erfindungsgemäßen optischen Sensors für Rotationsbewegungen. Diejenigen Teile, die mit den in Figur 1 gezeigten Teilen übereinstimmen, tragen in Figur 4 dieselben Bezugszahlen wie in Figur 1. Ein erster wesentlicher Unterschied in der Funktion des in Figur 4 gezeigten Sensors gegenüber der des in Figur 1 gezeigten Sensors liegt darin, daß der Laser 10 keine kontinuierliche Strahlung abgibt. Die vom Laser 10 abgegebene Strahlung trägt deshalb in Figur 4 die Bezugszahl 50. Die Strahlung 50 wird in eine erste und zweite Teilstrahlung 51, 52 aufgeteilt. Die erste Teilstrahlung 51 gelangt nach Durchlaufen des Umwegs 15 und des ersten Kopplers 16 als erste einzukoppelnde Strahlung 51′ in die ordnung 17. Die zweite Teilstrahlung 52 wird nach Durchlaufen des Kopplers 18 zur zweiten einzukoppelnden Strahlung 52′. Die beiden einzukoppelnden Strahlungen 51′, 52′ laufen in entgegengesetzten Richtungen in der Anordnung 17. Die erste einzukoppelnde Strahlung 51′ wird nach dem Durchlaufen der Anordnung 17 als erste auszukoppelnde Strahlung 51˝ dem zweiten Koppler 18 zugeleitet. Die zweite auszukoppelnde Strahlung 52′ wird ebenfalls nach dem Durchlaufen der Anordnung 17 als zweite einzukoppelnde Strahlung 52˝ dem ersten Koppler 16 zugeleitet.

Zwischen den beiden Kopplern 16, 18 ist ein optischer Kurzschluß 53 vorgesehen. Der erste Koppler 16 koppelt einen Teil der ersten Teilstrahlung 51 als erste Referenzstrahlung 51‴ aus, die dem zweiten Koppler 18 zugeführt wird. Der zweite Koppler 18 koppelt aus der zweiten Teilstrahlung 52 einen Teil als zweite Referenzstrahlung 52‴ aus, die dem ersten Koppler 16 zugeleitet wird. Aus dem ersten Koppler 16 wird eine erste Strahlung 51˝˝ und aus dem zweiten Koppler 18 eine zweite Strahlung 52˝˝ ausgekoppelt. Die ausgekoppelten Strahlungen 51˝˝, 52˝˝ entsprechen in zeitlicher Abfolge jeweils der ersten auszukoppelnden Strahlung 51˝ und der zweiten auszukoppelnden Strahlung 52˝ sowie der ersten Referenzstrahlung 51‴ und zweiten Referenzstrahlung 52‴. Der zeitliche Zusammenhang wird später anhand der in Figur 5 gezeigten funktionalen Zusammenhänge erläutert. Die Strahlung 50 des Lasers 10 wird mit einem Modulationssignal 54 sowohl ein- als auch ausgeschaltet sowie in der Frequenz moduliert. Das Modulationssignal 54 wird von einem Modulator 55 bereitgestellt, der ein weiteres Steuersignal 56 an einen Phasenvergleicher 57 abgibt. Der Phasenvergleicher 57 ermittelt in Abhängigkeit von dem Steuersignal 56 Phasenbeziehungen zwischen den in zeitlicher Folge auftretenden Ausgangssignalen 58, die am Fotodetektor 21 auftreten.

Im oberen Teil der Figur 5 ist ein funktionaler Zusammenhang zwischen einer Betriebszeit 59 und Betriebspause 60 des Lasers 10 in Abhängigkeit von der Zeit 61 gezeigt. Im unteren Teil von Figur 5 ist ein funktionaler Zusammenhang zwischen einer Frequenz 62 der vom Laser 10 abgegebenen Strahlung 50 und der Zeit 61 eingetragen. Dem oberen und unteren Teil von Figur 5 liegen dieselben zeitlichen Maßstäbe zugrunde. Eingetragen ist der maximale Frequenzunterschied 65, dessen Wert der in Figur 2 gezeigten Frequenzdifferenz 32 entsprechen kann. Die Frequenzmodulation findet während eines ersten Zeitintervalls 63 statt, die der Betriebszeit 59 des Lasers 10 entspricht. Der nach dem ersten Zeitintervall 63 liegende weitere Verlauf der Frequenzänderung ist unerheblich, weil in dem darauffolgenden Zeitintervall 64 die Betriebspause 60 des Lasers 10 liegt.

Die Funktion des in Figur 4 gezeigten Sensors wird in Verbindung mit den in Figur 5 gezeigten funktionalen Zusammenhängen näher erläutert:

Der Modulator 55 gibt das Modulationssignal 54 an den Laser 10 ab, das ihn für die Betriebszeit 59 einschaltet, der die Betriebspause 60 folgt. Während der Betriebszeit 59 wird über das Modulationssignal 54 die Frequenz einer vom Laser 10 abgegebenen Strahlung 50 variiert, wobei der maximale Frequenzunterschied 65 in Verbindung mit dem Umweg 15 festgelegt wird, um eine vorgegebene Heterodynfrequenz am Fotodetektor 21 zu erhalten. Der im unteren Teil von Figur 5 gezeigte, wenigstens näherungsweise lineare Anstieg der Frequenz 62 ergibt eine während dieser Zeit konstante Heterodynfrequenz am Fotodetektor 21. Anstelle des linearen Anstiegs ist auch ein beliebiger anderer Verlauf vorgebbar, wobei sich dann allerdings die Hyterodynfrequenz zeitlich ändert. Das erste Zeitintervall 63 ist im Vergleich zu dem in Figur 2 gezeigten Intervall 33 erheblich kürzer. Das erste Zeitintervall 63 wird zweckmäßigerweise derart festgelegt, daß während des ersten Intervalls 63 die auszukoppelnden Strahlungen 51˝, 52˝ aufgrund jeweils ihrer Laufzeiten durch die ringförmige Lichtleitfaseranordnung 17 den Fotodetektor 21 noch nicht erreicht haben. Das erste Zeitintervall 63 liegt beispielsweise im Mikrosekundenbereich, wenn für die ringförmige Lichtleitfaseranordnung 17 eine Länge von beispielsweise einigen hundert Metern vorgesehen ist. Währen des ersten Zeitintervalls 63 erreichen aber bereits die über den Kurzschluß 53 geführten Referenzstrahlungen 51‴, 52‴ als ausgekoppelte Strahlungen 51˝˝, 52˝˝ den Fotodete for 21. Die ausgekoppelte Strahlungen 51˝˝, 52˝˝ können entweder direkt am Fotodetektor 21 oder im dritten Koppler 19 überlagert werden. Das vom Fotodetektor 21 während des ersten Zeitintervalls 63 abgegebene Signal 58, das die Heterodynfrequenz aufweist, wird im Phasenvergleicher 57 hinsichtlich seiner Phasenlage ausgewertet. Die Phasenlage des Signals 58 während des ersten Zeitintervalls 63 wird mit dem anschließend im zweiten Zeitintervall 64 vom Fotodetektor 21 abgegebenen Signal 58 verglichen. Dieses Signal entsteht durch die auszukoppelnden Strahlungen 51˝, 52˝, die jeweils nach dem Durchlaufen der Anordnung 17 solange zur Verfügung stehen, wie das erste Zeitintervall 63 gedauert hat. Die auszukoppelnde Signale 51˝, 52˝ werden als ausgekoppelte Signale 51˝˝, 52˝˝ im dritten Koppler 19 überlagert und dem Fotodetektor 21 zugeleitet. Aus der Ermittlung der Differenz der Phasenlage des vom Fotodetektor 21 abgegebenen Signals während des zweiten Intervalls 64 mit dem im ersten Intervall 63 abgegebenen Signal kann die Drehrate bestimmt und am Ausgang 27 des Phasenvergleichers 57 bereitgestellt werden. Nach Ablauf des zweiten Zeitintervalls 64, dessen Länge zweckmäßigerweise gleich dem Zeitintervall 63 gewählt wird, folgt wieder das erste Zeitintervall 63. Mit dieser Maßnahme wird eine maximale Meßrate ohne Pausen erzielt.

In den Ausführungen des erfindungsgemäßen Sensors gemäß Figuren 1 und 4 ist es möglich, das optische Laufzeitglied 15 in einer der ausgekoppelten Strahlungen 13‴, 14‴ (Figur 1) oder in einer der ausgekoppelten Strahlungen 51˝˝, 52˝˝ (Figur 4) anzuordnen. Mit dieser Maßnahme wird erreicht, daß die Strahlungen in der Lichtleitfaseranordnung 17 zu jedem Zeitpunkt dieselbe Frequenz aufweisen. Phasenstörungen, die sich bei unterschiedlichen Frequenzen unterschiedlich auswirken, werden dann kompensiert.

In Figur 6 ist eine weitere Ausführung des erfindungsgemäßen Sensors für Rotationsbewegungen gezeigt. Diejenigen Teile, die mit den in Figur 1 gezeigten Teilen übereinstimmen, tragen in Figur 6 dieselben Bezugszahlen wie in Figur 1. Der in Figur 6 gezeigte Sensor entspricht in Aufbau und Funktion weitgehend dem in Figur 1 gezeigten Sensor. Der wesentliche Unterschied liegt darin, daß ein Vergleichssignal 70, mit dem das Ausgangssignal 26 des Fotodetektors 21 verglichen wird, aus der optischen Anordnung gewonnen wird. Dazu werden mit dem ersten Koppler 16 aus der ersten Teilstrahlung 13 eine erste Referenzstrahlung 13˝˝ und mit dem zweiten Koppler 18 aus der zweiten Teilstrahlung 14 eine zweite Referenzstrahlung 14˝˝ ausgekoppelt. Die beiden Referenzstrahlungen 13˝˝, 14˝˝ werden in einem vierten Koppler 71 überlagert und einem zweiten Fotodetektor 72 zugeleitet, der das Referenzsignal 70 abgibt. Zur Frequenzmodulation der Strahlung 11 des Lasers 10 ist das vom Modulator 22 abgegebene Modulationssignal 23 vorgesehen, das zu einer Modulation der Strahlung 11 führt, deren zeitlicher Verlauf dem in Figur 2 gezeigten Beispiel entspricht. Der Modulator 22 muß außer dem Modulationssignal 23 kein weiteres Signal zur Verfügung stellen. Der Phasenvergleicher 25 kann ohne weitere Steuersignale aus dem vom Fotodetektor 21 abgegebenen Signal 26 und aus dem vom weiteren Fotodetektor 72 abgegebenen Referenzsignal 70 die Phasendifferenz ermitteln und als Maß für die Drehrate am Ausgang 27 zur Verfügung stellen.

Der in Figur 6 gezeigte vierte Koppler 71 wird für die grundlegende Funktion nicht benötigt. Er kann auch weggelassen werden, wobei die beiden Referenzstrahlen 13˝˝, 14˝˝ unmittelbar am weiteren Fotodetektor 72 überlagert werden.

Allen Ausführungen ist gemeinsam, daß die unterschiedlichen optischen Strahlungen vollständig in Lichtleitfasern führbar sind. Als Mittel 12 zum Aufteilen der vom Laser abgegebenen Strahlung 11, 50 ist vorzugsweise ein fünfter Koppler 12 vorgesehen, der im Aufbau dem ersten und zweiten Koppler 16, 18 und den gegebenenfalls vorhandenen dritten und vierten Kopplern 19, 71 entspricht. Die Koppler 12, 16, 18, 19, 71 weisen vorzugsweise jeweils auf den Stirnseiten zwei Anschlußmöglichkeiten auf, wobei eine Kopplung strahlungsrichtungsabhängig erfolgt.

## Patentansprüche

1. Optischer Sensor für Rotationsbewegungen
- mit einer Laserstrahlungsquelle (10),
- mit einem Modulator (22) zum Modulieren der Frequenz der Strahlung (11) der Laserstrahlungsquelle (10),
- mit Mitteln (12) zum Aufteilen der von der Laserstrahlungsquelle (10) abgegebenen Strahlung (11) in eine erste und zweite Teilstrahlung (13, 14),
- mit einer ringförmigen Lichtleitfaseranordnung (17), in welche eine erste einzukoppelnde Teilstrahlung (13′) in eine erste Richtung und eine zweite einzukoppelnde Teilstrahlung (14′) in eine zur ersten Richtung entgegengesetzten Richtung eingekoppelt werden,
- mit einem ersten Strahlungskoppler (16) im Strahlengang der ersten Teilstrahlung (13) und einem zweiten Strahlungskoppler (18) im Strahlengang der zweiten Teilstrahlung (14),
- wobei der erste Strahlungskoppler (16) zum Auskoppeln einer durch die ringförmige Lichtleitfaseranordnung (17) gelaufenen zweiten auszukoppelnden Teilstrahlung (14˝) und der zweite Strahlungskoppler (18) zum Auskoppeln einer durch die ringförmige Lichtleitfaseranordnung (17) gelaufenen ersten auszukoppelnden Teilstrahlung (13˝) vorgesehen sind,
- mit einem Photodetektor (21), dem eine erste, aus der ersten auszukoppelnden Teilstrahlung (13˝) abgeleitete, ausgekoppelte Teilstrahlung (13‴) und dem eine zweite, aus der zweiten auszukoppelnden Teilstrahlung (14˝) abgeleitete, ausgekoppelte Teilstrahlung (14‴) zugeführt ist,
dadurch gekennzeichnet,
- daß die erste Teilstrahlung (13) oder die erste ausgekoppelte Teilstrahlung (13‴) oder die zweite Teilstrahlung (14) oder die zweite ausgekoppelte Teilstrahlung (14‴) ein optisches Laufzeitglied (15) durchläuft,
- und daß ein Phasenvergleicher (25) angeordnet ist, der eine Phasendifferenz zwischen einem, einem Modulationssignal (23) entsprechenden Signal (24) und dem vom Photodetektor (21) abgegebenen Signal (26) ermittelt und aus der Differenz die Drehrate der ringförmigen Lichtleitfaseranordnung (17) bestimmt.

2. Optischer Sensor für Rotationsbewegungen,
- mit einer Laserstrahlungsquelle (10),
- mit einem Modulator (22) zum Modulieren der Frequenz der Strahlung (11) der Laserstrahlungsquelle (10),
- mit Mitteln (12) zum Aufteilen der von der Laserstrahlungsquelle (10) abgegebenen Strahlung (50) in eine erste und zweite Teilstrahlung (51, 52),
- mit einer ringförmigen Lichtleitfaseranordnung (17), in welche eine erste einzukoppelnde Teilstrahlung (51′) in eine erste Richtung und eine zweite einzukoppelnde Teilstrahlung (52′) in eine zur ersten Richtung entgegengesetzten Richtung eingekoppelt werden,
- mit einem ersten Strahlungskoppler (16) im Strahlengang der ersten Teilstrahlung (51) und einem zweiten Strahlungskoppler (18) im Strahlengang der zweiten Teilstrahlung (52),
- wobei der erste Strahlungskoppler (16) zum Auskoppeln einer durch die ringförmige Lichtleitfaseranordnung (17) gelaufenen zweiten auszukoppelnden Teilstrahlung (52˝) und der zweite Strahlungskoppler (18) zum Auskoppeln einer durch die ringförmige Lichtleitfaseranordnung (17) gelaufenen ersten auszukoppelnden Teilstrahlung (51˝) vorgesehen sind,
- mit einem Photodetektor (21), dem eine erste, von der ersten auszukoppelnden Teilstrahlung (51˝) abgeleitete, ausgekoppelte Teilstrahlung (51˝˝) und eine zweite, von der zweiten auszukoppelnden Teilstrahlung (52˝) abgeleitete, zweite ausgekoppelte Teilstrahlung (52˝˝) zugeführt ist,
dadurch gekennzeichnet,
- daß die erste Teilstrahlung (51) oder die erste ausgekoppelte Teilstrahlung (51˝˝) oder die zweite Teilstrahlung (52) oder die zweite ausgekoppelte Teilstrahlung (52˝˝) ein optisches Laufzeitglied (15) durchläuft,
- daß zwischen dem ersten und zweiten Strahlungskoppler (16, 18) ein optischer Kurzschluß (53) angeordnet ist, der einen Teil der ersten Teilstrahlung (51) als erste Referenzstrahlung (51‴) über den zweiten Strahlungskoppler (18) und einen Teil der zweiten Teilstrahlung (52) als zweite Referenzstrahlung (52‴) über den ersten Strahlungskoppler (16) dem Photodetektor (21) jeweils zuführt,
- daß die Laserstrahlungsquelle (10) ein erstes vorgebbares Zeitintervall (63) eingeschaltet und ein zweites vorgebbares Zeitintervall (64) abgeschaltet ist
- und daß ein Phasenvergleicher (57) angeordnet ist, der eine Phasendifferenz zwischen dem vom Photodetektor (21) während des ersten Zeitintervalls (63) und dem während des zweiten Zeitintervalls (64) abgegebenen Signal (58) ermittelt und aus der Differenz die Drehrate der ringförmigen Lichtleitfaseranordnung (17) bestimmt.

3. Optischer Sensor für Rotationsbewegungen,
- mit einer Laserstrahlungsquelle (10),
- mit einem Modulator (22) zum Modulieren der Frequenz der Strahlung (11) der Laserstrahlungsquelle (10),
- mit Mitteln (12) zum Aufteilen der von der Laserstrahlungsquelle (10) abgegebenen Strahlung (11) in eine erste und zweite Teilstrahlung (13, 14),
- mit einer ringförmigen Lichtleitfaseranordnung (17), in welche eine erste einzukoppelnde Strahlung (13′) in eine erste Richtung und eine zweite einzukoppelnde Strahlung (14′) in eine zur ersten Richtung entgegengesetzten Richtung eingekoppelt werden,
- mit einem Strahlungskoppler (16) im Strahlengang der ersten Teilstrahlung (13) und einem zweiten Strahlungskoppler (18) im Strahlengang der zweiten Teilstrahlung (14),
- wobei der erste Strahlungskoppler (16) zum Auskoppeln einer durch die ringförmige Lichtleitfaseranordnung (17) gelaufenen zweiten auszukoppelnden Teilstrahlung (14˝) und der zweite Strahlungskoppler (18) zum Auskoppeln einer durch die ringförmige Lichtleitfaseranordnung (17) gelaufenen ersten auszukoppelnden Teilstrahlung (13˝) vorgesehen sind,
- mit einem Photodetektor (21), dem eine erste, von der ersten auszukoppelnden Teilstrahlung (13˝) abgeleitete, ausgekoppelte Teilstrahlung (13‴) und eine zweite, von der zweiten auszukoppelnden Teilstrahlung (14˝) abgeleitete, ausgekoppelte Teilstrahlung (14‴) zugeführt ist,
- dadurch gekennzeichnet,
- daß die erste Teilstrahlung (13) oder die zweite Teilstrahlung (14) ein optisches Laufzeitglied (15) durchläuft,
- daß aus dem ersten Strahlungskoppler (16) ein Teil der ersten Teilstrahlung (13) als erste Referenzstrahlung (13˝˝) und aus dem zweiten Strahlungskoppler (18) ein Teil der zweiten Teilstrahlung (14) als zweite Referenzstrahlung (14˝˝) ausgekoppelt werden,
- daß die Referenzstrahlungen (13˝˝, 14˝˝) einem Referenzphotodetektor (72) zugeleitet sind
- und daß ein Phasenvergleicher (73) angeordnet ist, der eine Phasendifferenz zwischen dem vom Photodetektor (21) und vom Referenzphotodetektor (72) abgegebenen Signal (26, 70) ermittelt und aus der Differenz die Drehrate der ringförmigen Lichtleitfaseranordnung (17) bestimmt.

4. Sensor nach einem der vorhergehenden Ansprüche, dadurch gekennzeichnet, daß die optischen Strahlungen (13, 13′, 13˝, 13‴, 13˝˝, 14, 14′, 14˝, 14‴, 14˝˝, 51, 51′, 51˝, 51‴, 51˝˝, 52, 52′, 52˝, 52‴, 52˝˝, 11, 50) in Lichtleitfasern geführt sind.

5. Sensor nach einem der vorhergehenden Ansprüche, dadurch gekennzeichnet, daß ein dritter Koppler (19) zum Überlagern der ausgekoppelten Strahlungen (13‴, 14‴; 51˝˝, 52˝˝) vorgesehen ist.

6. Sensor nach einem der Ansprüche 3 bis 5, dadurch gekennzeichnet, daß ein vierter Koppler (71) zum Überlagern der ersten Referenzstrahlung (13˝˝) und der zweiten Referenzstrahlung (14˝˝) vorgesehen ist.

7. Vorrichtung nach Anspruch 1 und einem der Ansprüche 4 bis 6, dadurch gekennzeichnet, daß das erste Zeitintervall (63) und das zweite Zeitintervall (64) wenigstens näherungsweise gleich lang sind.

8. Sensor nach einem der vorhergehenden Ansprüche, dadurch gekennzeichnet, daß als Mittel (12) ein fünfter Koppler vorgesehen ist.

9. Sensor nach einem der vorhergehenden Ansprüche, dadurch gekennzeichnet, daß die Laserstrahlungsquelle (10) ein Halbleiterlaser ist.

## Claims

1. Optical sensor for rotary movements
- having a laser radiation source (10),
- having a modulator (22) for modulating the frequency of the radiation (11) of the laser radiation source (10),
- having means (12) for splitting the radiation (11) emitted by the laser radiation source (10) into a first and second partial beam (13, 14),
- having an annular optical fibre arrangement (17) into which there is launched in a first direction a first partial beam (13′) to be launched, and in a direction opposite to the first direction a second partial beam (14′) to be launched,
- having a first radiation coupler (16) in the beam path of the first partial beam (13) and a second radiation coupler (18) in the beam path of the second partial beam (14),
- the first radiation coupler (16) being provided for coupling out a second partial beam (14˝) to be coupled out which has passed through the annular optical fibre arrangement (17), and the second radiation coupler (18) being provided for coupling out a first partial beam (13˝) to be coupled out which has passed through the annular optical fibre arrangement (17),
- and having a photodetector (21) to which there are fed a first coupled-out partial beam (13‴) derived from the first partial beam (13˝) to be coupled out, and a second coupled-out partial beam (14‴) derived from the second partial beam (14˝) to be coupled out,
characterized
- in that the first partial beam (13) or the first coupled-out partial beam (13‴) or the second partial beam (14) or the second coupled-out partial beam (14‴) traverses an optical delay circuit (15),
- and in that a phase comparator (25) is arranged which determines a phase difference between a signal (24) corresponding to a modulation signal (23) and the signal (26) output by the photodetector (21), and determines from the difference the rate of rotation of the annular optical fibre arrangement (17).

2. Optical sensor for rotary movements
- having a laser radiation source (10),
- having a modulator (22) for modulating the frequency of the radiation (11) of the laser radiation source (10),
- having means (12) for splitting the radiation (50) emitted by the laser radiation source (10) into a first and second partial beam (51, 52),
- having an annular optical fibre arrangement (17) into which there is launched in a first direction a first partial beam (51′) to be launched, and in a direction opposite to the first direction a second partial beam (52′) to be launched,
- having a first radiation coupler (16) in the beam path of the first partial beam (51) and a second radiation coupler (18) in the beam path of the second partial beam (52),
- the first radiation coupler (16) being provided for coupling out a second partial beam (52˝) to be coupled out which has passed through the annular optical fibre arrangement (17), and the second radiation coupler (18) being provided for coupling out a first partial beam (51˝) to be coupled out which has passed through the annular optical fibre arrangement (17),
- and having a photodetector (21) to which there are fed a first coupled-out partial beam (51˝˝) derived from the first partial beam (51˝) to be coupled out, and a second coupled-out partial beam (52˝˝) derived from the second partial beam (52˝) to be coupled out,
characterized
- in that the first partial beam (51) or the first coupled-out partial beam (51˝˝) or the second partial beam (52) or the second coupled-out partial beam (52˝˝) traverses an optical delay circuit (15),
- in that there is arranged between the first and second radiation couplers (16, 18) an optical short-circuit (53) which respectively feeds to the photodetector (21) a portion of the first partial beam (51) as first reference beam (51‴) via the second radiation coupler (18), and a portion of the second partial beam (52) as second reference beam (52‴) via the first radiation coupler (16),
- in that the laser radiation source (10) is switched on for a first prescribable time interval (63) and switched off for a second prescribable time interval (64),
- and in that a phase comparator (57) is arranged which determines a phase difference between the signal (58) output by the photodetector (21) during the first time interval (63) and the signal (58) output during the second time interval (64) and determines from the difference the rate of rotation of the annular optical fibre arrangement (17).

3. Optical sensor for rotary movements
- having a laser radiation source (10),
- having a modulator (22) for modulating the frequency of the radiation (11) of the laser radiation source (10),
- having means (12) for splitting the radiation (11) emitted by the laser radiation source (10) into a first and second partial beam (13, 14),
- having an annular optical fibre arrangement (17) into which there is launched in a first direction a first beam (13′) to be launched, and in a direction opposite to the first direction a second beam (14′) to be launched,
- having a radiation coupler (16) in the beam path of the first partial beam (13) and a second radiation coupler (18) in the beam path of the second partial beam (14),
- the first radiation coupler (16) being provided for coupling out a second partial beam (14˝) to be coupled out which has passed through the annular optical fibre arrangement (17), and the second radiation coupler (18) being provided for coupling out a first partial beam (13˝) to be coupled out which has passed through the annular optical fibre arrangement (17),
- and having a photodetector (21) to which there are fed a first coupled-out partial beam (13‴) derived from the first partial beam (13˝) to be coupled out, and a second coupled-out partial beam (14‴) derived from the second partial beam (14˝) to be coupled out,
characterized
- in that the first partial beam (13) or the second partial beam (14) traverses an optical delay circuit (15),
- in that a portion of the first partial beam (13) is coupled out of the first radiation coupler (16) as first reference beam (13˝˝) and a portion of the second partial beam (14) is coupled out of the second radiation coupler (18) as second reference beam (14˝˝),
- in that the reference beams (13˝˝, 14˝˝) are fed to a reference photodetector (72),
- and in that a phase comparator (73) is arranged which determines a phase difference between the signal (26, 70) output by the photodetector (21) and by the reference photodetector (72), and determines the rate of rotation of the annular optical fibre arrangement (17) from the difference.

4. Sensor according to one of the preceding claims, characterized in that the optical beams (13, 13′, 13˝, 13‴, 13˝˝, 14, 14′, 14˝, 14‴, 14˝˝, 51, 51′, 51˝, 51‴, 51˝˝, 52, 52′, 52˝, 52‴, 52˝˝, 11, 50) are guided in optical fibres.

5. Sensor according to one of the preceding claims, characterized in that a third coupler (19) is provided for superimposing the coupled-out beams (13‴, 14‴; 51˝˝, 52˝˝).

6. Sensor according to one of Claims 3 to 5, characterized in that a fourth coupler (71) is provided for superimposing the first reference beam (13˝˝) and the second reference beam (14˝˝).

7. Sensor according to Claim 1 and one of Claims 4 to 6, characterized in that the first time interval (63) and the second time interval (64) are at least approximately of equal length.

8. Sensor according to one of the preceding claims, characterized in that a fifth coupler is provided as means (12).

9. Sensor according to one of the preceding claims, characterized in that the laser radiation source (10) is a semiconductor laser.

## Revendications

1. Détecteur optique pour des mouvements de rotation :
- avec une source de rayonnement laser (10),
- avec un modulateur (22) pour moduler la fréquence du rayonnement (11) de la source de rayonnement laser (10),
- avec des moyens (12) pour diviser le rayonnement (11) délivré par la source de rayonnement laser (10) en un premier et un second rayonnements partiels (13, 14),
- avec un dispositif de fibres optiques (17) en forme d'anneau, dans lequel un premier rayonnement partiel (13′) devant être couplé sera couplé dans une première direction tandis qu'un second rayonnement partiel (14′) devant être couplé sera couplé dans une direction opposée à la première direction,
- avec un premier coupleur de rayonnement (16) sur le trajet du premier rayonnement partiel (13) et un second coupleur de rayonnement (18) sur le trajet du second rayonnement partiel (14),
- tandis que le premier coupleur de rayonnement (16) est prévu pour le découplage d'un second rayonnement partiel devant être capté (14˝) ayant parcouru le dispositif de fibres optiques (17) en forme d'anneau, et le second coupleur de rayonnement (18) est prévu pour le découplage d'un premier rayonnement partiel devant être capté (13˝) ayant parcouru le dispositif de fibres optiques (17) en forme d'anneau,
- avec un photodétecteur (21) auquel est amené un premier rayonnement partiel capté (13‴) dérivé du premier rayonnement partiel (13˝) devant être découplé, ainsi qu'un second rayonnement partiel capté (14‴) dérivé du second rayonnement partiel (14˝) devant être découplé,
détecteur optique caractérisé :
- en ce que le premier rayonnement partiel (13) ou bien le premier rayonnement partiel capté (13‴), ou bien le second rayonnement partiel (14) ou le deuxième rayonnement partiel capté (14‴) parcourent un élément de temporisation optique (15),
- et en ce que il est prévu un comparateur de phase (25) qui détermine une différence de phase entre un signal (24) correspondant à un signal de modulation (23) et le signal (26) délivré par le photodétecteur (21), et à partir de la différence détermine le taux de rotation du dispositif de fibres optiques (17) en forme d'anneau.

2. Détecteur optique pour des mouvements de rotation,
- avec une source de rayonnement laser (10),
- avec un modulateur (22) pour moduler la fréquence du rayonnement (11) de la source de rayonnement laser (10),
- avec des moyens (12) pour diviser le rayonnement (50) délivré par la source de rayonnement laser (10) en un premier et un second rayonnement (51, 52),
- avec un dispositif de fibres optiques (17) en forme d'anneau dans lequel sont couplés un premier rayonnement partiel (51′) devant être couplé dans une première direction et un second rayonnement partiel (52′) devant être couplé dans une direction opposée à la première direction,
- avec un premier coupleur de rayonnement (16) sur le trajet du premier rayonnement partiel (51) et un deuxième coupleur de rayonnement (18) sur le trajet du deuxième rayonnement partiel (52),
- tandis que le premier coupleur de rayonnement (16) est prévu pour découpler un second rayonnement partiel devant être capté (52˝) ayant parcouru le dispositif de fibres optiques (17) en forme d'anneau, et que le second coupleur de rayonnement (18) est prévu pour découpler un premier rayonnement partiel devant être capté (51˝) ayant parcouru le dispositif de fibres optiques (17) en forme d'anneau,
- avec un photodétecteur (21) auquel est amené un premier rayonnement partiel capté (51˝˝) dérivé du premier rayonnement partiel devant être découplé (51˝), et un second rayonnement partiel capté (52˝), dérivé du second rayonnement partiel (52˝˝) devant être découplé,
détecteur optique caractérisé :
- en ce que le premier rayonnement partiel (51) ou bien le premier rayonnement partiel découplé (51˝˝) ou le second rayonnement partiel (52) ou bien le second rayonnement partiel découplé (52˝˝) parcourt une bascule optique de retard (15),
- en ce qu'entre le premier et le second coupleurs de rayonnement (16, 18) est disposé un court-circuit optique (53), qui amène respectivement, par l'intermédiaire du deuxième coupleur de rayonnement (18) une partie du premier rayonnement partiel (51) en tant que premier rayonnement de référence (51‴), et par l'intermédiaire du premier coupleur de rayonnement (16) une partie du second rayonnement partiel (52) en tant que deuxième rayonnement de référence (52‴),
- en ce que la source de rayonnement laser (10) est connectée pendant un premier intervalle de temps (63) susceptible d'être prédéfini, et est déconnectée pendant un second intervalle de temps (64) susceptible d'être prédéfini,
- et en ce qu'il est prévu un comparateur de phase (57), qui détermine une différence de phase entre le signal (58) délivré par le photodétecteur (21) pendant le premier intervalle de temps (63) et celui délivré pendant le deuxième intervalle de temps (64), et à partir de cette différence détermine le taux de rotation du dispositif de fibres optiques (17) en forme d'anneau.

3. Détecteur optique pour des mouvements de rotation,
- avec une source de rayonnement laser (10),
- avec un modulateur (22) pour moduler la fréquence du rayonnement (11) de la source de rayonnement laser (10),
- avec des moyens (12) pour diviser le rayonnement (11) délivré par la source de rayonnement laser (10) en un premier et un second rayonnements partiels (13, 14),
- avec un dispositif de fibres optiques (17) en forme d'anneau, dans lequel sont couplés un premier rayonnement (13′) devant être couplé dans une première direction et un deuxième rayonnement (14′) devant être couplé dans une direction opposée à la première direction,
- avec un coupleur de rayonnement (16) sur le trajet du premier rayonnement (13) et un deuxième coupleur de rayonnement (18) sur le trajet du deuxième rayonnement partiel (14),
- tandis que le premier coupleur de rayonnement (16) est prévu pour découpler un second rayonnement partiel à capter (14˝) ayant parcouru le dispositif de fibres optiques (17) en forme d'anneau, et le deuxième coupleur de rayonnement (18) est prévu pour découpler un premier rayonnement partiel à capter (13˝) ayant parcouru le dispositif de fibres optiques en forme d'anneau,
- avec un photodétecteur (21) auquel est amené un premier rayonnement partiel capté (13‴) dérivé du premier rayonnement partiel (13˝) devant être découplé, et un second rayonnement partiel capté (14‴) dérivé du second rayonnement partiel (14˝) devant être découplé,
détecteur optique caractérisé :
- en ce que le premier rayonnement partiel (13) ou bien le second rayonnement partiel (14) parcourt un élément de temporisation optique (15),
- en ce qu'à partir du premier coupleur de rayonnement (16) une partie du premier rayonnement partiel (13) en tant que premier rayonnement de référence (13˝˝) et à partir du second coupleur de rayonnement (18) une partie du second rayonnement partiel (14) en tant que second rayonnement de référence (14˝˝) sont découplées,
- en ce que les rayonnements de référence (13˝˝, 14˝˝) sont amenés à un photodétecteur de référence (72),
- et en ce qu'il est prévu un comparateur de phase (73) qui détermine une différence de phase entre le signal (26, 70) délivré par le photodétecteur (21) et par le photodétecteur de référence (72), et qui à partir de cette différence détermine le taux de rotation du dispositif de fibres optiques (17) en forme d'anneau.

4. Détecteur selon une des revendications précédentes, caractérisé en ce que les rayonnements optiques (13,13′,13˝,13‴,13˝˝,14,14′,14˝,14‴,14˝˝,.51,51′,51˝, 51‴, 51˝˝,52′ ,52˝,52‴,52˝˝,11,50) sont dirigés dans des fibres optiques.

5. Détecteur selon une des précédentes revendications, caractérisé en ce qu'un troisième coupleur (19) est prévu pour superposer les rayonnements captés (13‴, 14‴ ; 51˝˝, 52˝˝).

6. Détecteur selon une des revendications 3 à 5, caractérisé en ce qu'un quatrième coupleur (71) est prévu pour superposer le premier rayonnement de référence (13˝˝) et le second rayonnement de référence (14˝˝).

7. Dispositif selon la revendication 1 et une des revendications 4 à 6, caractérisé en ce que le premier intervalle de temps (63) et le second intervalle de temps (64) ont au moins approximativement la même longueur.

8. Détecteur selon une des précédentes revendications, caractérisé en ce que, comme moyen (12), il est prévu un cinquième coupleur.

9. Détecteur selon une des précédentes revendications, caractérisé en ce que la source de rayonnement laser (10) est un laser à semi-conducteur.
